# EUROPÄISCHE PATENTSCHRIFT

(11) **EP 2 229 273 B1**
(45) Veröffentlichungstag und Bekanntmachung des Hinweises auf die Patenterteilung: **27.01.2016**
(21) Anmeldenummer: 08860048.1
(22) Anmeldetag: 12.11.2008
(51) Int. Cl.: B29C 70/44, B29D 22/00

(54) **VERFAHREN UND VORRICHTUNG ZUR HERSTELLUNG RÖHRENFÖRMIGER STRUKTURBAUTEILE**
METHOD AND DEVICE FOR PRODUCING TUBE-SHAPED STRUCTURAL COMPONENTS
PROCÉDÉ ET DISPOSITIF DE FABRICATION D'ÉLÉMENTS STRUCTURAUX TUBULAIRES

(30) Priorität: 13.12.2007 DE 102007060029; 13.12.2007 US 7492 P
(43) Veröffentlichungstag der Anmeldung: 22.09.2010
(73) Patentinhaber: Airbus Operations GmbH, 21129 Hamburg (DE)
(72) Erfinder: LENGSFELD, Hauke, 21717 Helmste (DE); REYE, Volker, 22609 Hamburg (DE)
(74) Vertreter: Isarpatent
(86) Internationale Anmeldenummer: PCT/EP2008/065355
(87) Internationale Veröffentlichungsnummer: WO 2009/074419

(56) Entgegenhaltungen:
- EP-A- 0 408 161
- EP-A- 0 911 143
- EP-A- 1 134 069
- WO-A-00/61464
- WO-A-2004/011169
- US-A- 2 739 350
- US-A- 2 815 534

## Beschreibung

Die vorliegende Erfindung betrifft ein Verfahren und eine Vorrichtung zum Herstellen eines röhrenförmigen Strukturbauteils, insbesondere einer Rumpftonnensektion eines Luft- oder Raumfahrzeugs.

Obwohl auf beliebige röhrenförmige Strukturbauteile mit beliebigen Querschnittsformen anwendbar, werden die vorliegende Erfindung sowie die ihr zugrunde liegende Problematik in Bezug auf die Herstellung von Rumpftonnensektionen von Flugzeugen näher erläutert.

Beim Bau von Flugzeugrümpfen insbesondere für Verkehrsflugzeuge ist es üblich, röhren- oder tonnenförmige Rumpfsektionen einzeln vorzufertigen und in einer anschließenden Endmontage zum fertigen Flugzeugrumpf zusammenzusetzen. Als Werkstoffe werden zunehmend Faserverbundwerkstoffe wie z.B. kohlenstofffaserverstärkter Kunststoff (CFK) verwendet, mit denen eine hohe Stabilität der Sektionen bei geringerem Gewicht erreicht werden kann.

Die Herstellung einer Rumpftonnensektion auf Grundlage von Faserverbundwerkstoffen erfolgt gemäß einem herkömmlichen Verfahren mit Hilfe eines Wickelkörpers als Positivwerkzeug, auf den Lagen eines mit einer Harzmatrix vorimprägnierten Fasermaterials (Prepregs) aufgewickelt und anschließend ausgehärtet werden, z.B. durch eine Wärmebehandlung. Der Faserlege- (Fiber Placement) oder Wickelvorgang ist aufgrund der Größe des Bauteils und unterschiedlicher Faserrichtungen der Prepreglagen sehr zeitintensiv.

Da schon geringe Abweichungen im Durchmesser benachbarter Rumpftonnensektionen die Endmontage behindern können, muss der Wickelkörper eine hohe Maßgenauigkeit aufweisen und darf sich nach dem Faserlegevorgang, z.B. während einer Wärmebehandlung, nicht mehr ausdehnen. Gleichzeitig ist es notwendig, den Wickelkörper teilbar oder zusammenlegbar auszuführen, so dass er nach dem Aushärtevorgang durch Teilen bzw. Zusammenlegen nach innen hin geschrumpft und aus der Rumpftonnensektion entfernt werden kann. Die Bereitstellung eines Wickelkörpers, der diese Eigenschaften vereint, ist mit hohen Kosten verbunden.

Um eine Rumpftonnensektion mit glatter Außenfläche und entsprechend vorteilhaften aerodynamischen Eigenschaften zu erhalten, werden für den Aushärtevorgang zusätzlich Druckbleche aufgelegt. Dabei darf sich zwischen Druckblech und Prepreggelege kein Hilfsmaterial wie z.B. Abreiß- oder Belüftungsgewebe befinden, da dieses zu einer rauen Oberfläche der Rumpftonnensektion führen würde. Im Allgemeinen ist es nicht möglich, überschüssiges Harz oder Luft aus dem Raum zwischen dem Wickelkörper und den Druckblechen zu entsorgen. Mangelnde Entsorgung von Harz oder Luft führt jedoch leicht zu porösen und damit minderwertigen Bauteilen.

Weitere Probleme sind dadurch bedingt, dass sich die Dicke des Prepreggeleges während des Aushärtevorgangs um den sogenannten Setzweg verringert, was bei der Formgebung und beim Andrücken der Druckbleche zu berücksichtigen ist. Der Setzweg des Prepregmaterials kann jedoch abhängig von der Materialcharge schwanken und so z.B. bei einer Charge mit einem relativ großen Setzweg zur Ursache von Porositäten werden. Da der Innendurchmesser der Rumpftonnensektion durch den Außendurchmesser des Wickelkörpers fest vorgegeben ist, verringert sich während des allmählichen Setzens des Prepreggeleges der Außendurchmesser der Rumpftonnensektion. Das Prepreggelege wird folglich in Umfangsrichtung der Sektion zusammengeschoben, was leicht zu unerwünschten Welligkeiten der Fasern führt.

Die Druckschrift EP 1 134 069 A1 offenbart ein Verfahren zur Herstellung eines Bauteils, bei dem ein Fasergewebe auf einem expandierbaren Kern platziert wird. Die Außenkontur des Kerns entspricht dabei nahezu der Kontur des zu erstellenden Faserverbundbauteils bzw. der Innenkontur einer äußeren Form. Der Kern kann durch Innendruck das Fasergewebe gegen die Innenfläche der äußeren Form pressen. Nach dem Infiltrieren mit Matrixmaterial kann das Bauteil ausgehärtet werden.

Die Druckschrift WO 00/61464 A1 offenbart ein Verfahren zur Herstellung eines Bauteils, bei dem auf einem nicht expandierbaren Kern ein Geflecht aus Verstärkungsfasern erzeugt wird. Nach dem Aufbau des Fasergeflechts werden der Kern und das Fasergeflecht von einem äußeren Form pressdicht umschlossen und mit Wärme beaufschlagt, um das mit einem Matrixmaterial beaufschlagte Fasergeflecht auszuhärten.

Es ist daher Aufgabe der vorliegenden Erfindung, bei der Herstellung von röhrenförmigen Strukturbauteilen und insbesondere von Rumpftonnensektionen eine hohe Qualität bei geringen Kosten zu erreichen.

Erfindungsgemäß wird diese Aufgabe durch ein Verfahren zur Herstellung eines röhrenförmigen Strukturbauteils mit den Merkmalen des Patentanspruchs 1 sowie durch eine Vorrichtung zur Herstellung eines röhrenförmigen Strukturbauteils mit den Merkmalen des Patentanspruchs 10 gelöst.

Die der vorliegenden Erfindung zugrunde liegende Idee besteht darin, zur Herstellung des Strukturbauteils ein ebenfalls röhrenförmiges Formwerkzeug zu verwenden, das als ein Negativwerkzeug ausgebildet ist, d.h. eine innere Formfläche aufweist, die ein Negativ der auszubildenden Außenfläche des Strukturbauteils darstellt. Der Begriff "röhrenförmig" ist hierbei nicht auf Röhren mit kreisförmigen Querschnitten beschränkt, sondern schließt ausdrücklich Röhren mit elliptischen, rechteckigen oder anderen, beliebig geformten Querschnitten ein, wobei der Querschnitt über die Länge der Röhre nicht konstant zu sein braucht, sondern sich verengen, aufweiten oder anderweitig verformen kann.

Um Fasergelege an der Innenfläche des Formwerkzeugs anzuordnen, wird weiterhin ein Träger bereitgestellt, der expandierbar ist, d.h. wahlweise zumindest in einen expandierten und einen nicht expandierten Zustand gebracht werden kann. Im nicht expandierten Zustand weist der Träger eine Form auf, die kleiner ist als der von der Innenfläche des Formwerkzeugs umschriebene Raum, sodass der Träger in diesem Zustand im Inneren des Formwerkzeugs anordbar ist. Dabei verbleibt zwischen der Innenfläche des Formwerkzeugs und einer Außenfläche des Trägers ein Mindestabstand, der hier als Expansionsabstand bezeichnet werden soll.

Die bei Anordnung des Trägers im Formwerkzeug der Innenfläche des Formwerkzeugs gegenüber liegende Außenfläche des Trägers dient als Trägerfläche, die während des Herstellungsverfahrens das zu verarbeitende Fasergelege trägt. Das Fasergelege wird in Schlauchform bereitgestellt und auf der Trägerfläche angeordnet, sodass die Trägerfläche durch das schlauchförmige Gelege bedeckt ist. Beispielsweise wird das schlauchförmige Fasergelege über den Träger gezogen, während sich dieser im nicht expandierten Zustand frei zugänglich außerhalb des Formwerkzeugs befindet.

Der Träger wird sodann derart im Formwerkzeug angeordnet, dass die vom schlauchförmigen Fasergelege bedeckte Trägerfläche der Innenfläche des Formwerkzeugs gegenüberliegt, wobei zwischen dem Fasergelege und der Innenfläche der um die Dicke des Fasergeleges verminderte Expansionsabstand verbleibt. Der Träger wird nun expandiert, wodurch dieser verbliebene Abstand auf Null schrumpft und das Fasergelege von der Trägerfläche des expandierten Trägers gegen die Innenfläche des Formwerkzeugs gepresst wird. In einem abschließenden Schritt wird das zwischen der Trägerfläche und der Innenfläche des Formwerkzeugs gehaltene Fasergelege mit einer aushärtbaren Matrix infiltriert.

Die Verwendung eines Negativwerkzeugs, das die Außenkontur der Rumpftonnensektion abbildet, ermöglicht es, die gewünschten Außenmaße mit hoher Genauigkeit einzuhalten. Das Formwerkzeug kann ohne großen konstruktiven Aufwand einteilig oder auf einfache Weise nach außen hin aufklappbar oder zerlegbar ausgeführt werden. Der Aufbau des Fasergeleges unabhängig vom Form- und Aushärtewerkzeug auf dem Träger ermöglicht, mehrere für ein gegebenes Formwerkzeug passende Träger bereitzustellen und umschichtig einen der Träger außerhalb des Formwerkzeugs mit Fasergelege zu beschicken, während ein anderer Träger sich zur Aushärtung im Formwerkzeug befindet. Auf diese Weise lassen sich Formwerkzeug und ggf. eine Aushärtestation kontinuierlich nutzen, was die Herstellungskosten senkt und Wartezeiten verkürzt.

Die Verwendung von Fasergelege, das mit einer separat bereitgestellten Matrix infiltriert wird, bietet gegenüber der herkömmlichen Verwendung von Prepregs weitere Zeitvorteile und größere Freiheiten in der konstruktiven Auslegung der hergestellten Strukturbauteile. Da das Fasergelege durch die Expansion des Trägers in Umfangsrichtung gedehnt wird, werden Faserwelligkeiten vermieden.

Gemäß einer bevorzugten Weiterbildung beträgt der Expansionsabstand zwischen 1 und 10 cm, z.B. etwa 5 cm. Bei einem derartigen Abstand verbleibt zwischen der Trägerfläche und der Innenfläche des Formwerkzeugs genügend Spielraum, um den Träger besonders rasch und berührungslos in das Formwerkzeug hinein und wieder hinaus zu bewegen, während andererseits vermieden wird, das schlauchförmige Gelege während des Expandierens zu überdehnen.

Das Bedecken der Trägerfläche erfolgt erfindungsgemäß derart, dass Fasern einer Faserlage des Fasergeleges diagonal um den Träger verlaufen. Dies ermöglicht vorteilhaft, das schlauchförmige Fasergelege radial zu expandieren, wobei sich der Neigungswinkel der Fasern ändert, ohne dass die Fasern in ihrer Längenrichtung überdehnt werden. Vorzugsweise weist das schlauchförmige Fasergelege nach dem Bedecken des Trägers eine größere Länge auf, als das Strukturbauteil, so dass beim radialen Expandieren des Trägers sich das Fasergelege in seiner Längsrichtung kontrahieren kann, ohne dass es zu einer unvollständigen Bedeckung der Trägerfläche kommt.

Erfindungsgemäß umfasst der Träger eine Druckmembran, wobei das Expandieren des Trägers durch Erzeugen einer Druckdifferenz zwischen einem Innenbereich des Trägers und einem Zwischenbereich zwischen der Druckmembran und dem Formwerkzeug erfolgt. Die Druckmembran übt über die gesamte Innenfläche des röhrenförmigen Formwerkzeugs einen gleichmäßigen, mittels der Druckdifferenz präzise einstellbaren Anpressdruck auf das schlauchförmige Fasergelege aus, was eine besonders gleichmäßige Formung der Wand des Strukturbauteils ermöglicht.

Vorzugsweise wird zum Erzeugen der Druckdifferenz der Druck im Innenbereich des Trägers über den Atmosphärendruck hinaus erhöht. Geeignete Kompressionsvorrichtungen lassen sich im Innern des Trägers unterbringen, so dass beim Anordnen des Trägers im Formwerkzeug der Träger ohne Abdichten z.B. des Zwischenbereichs expandierbar ist. Alternativ oder zusätzlich wird zum Erzeugen der Druckdifferenz der Druck im Zwischenbereich zwischen der Druckmembran und dem Formwerkzeug unter den Atmosphärendruck abgesenkt. Dies ermöglicht, den Innenbereich z.B. zur Inspektion zugänglich zu machen. Die Druckmembran braucht nicht für hohe Absolutdrücke ausgelegt zu werden.

Erfindungsgemäß ist weiterhin ein Schritt des Anordnens eines Versteifungselements zwischen der Trägerfläche und dem Fasergelege vorgesehen. Dies ermöglicht, in einem Arbeitsgang mit der Herstellung des Strukturbauteils das Versteifungselement, z.B. einen Stringer, an das Strukturbauteil anzubinden. Vorzugsweise wird das Versteifungselement während des Expandierens des Trägers in mindestens einem in einer radialen Richtung des röhrenförmigen Formwerkzeugs verlaufenden Führungsschlitz geführt. So wird das Versteifungselement ohne Verkanten präzise an die gewünschte Anbindeposition geführt.

Gemäß einer bevorzugten Weiterbildung wird das Versteifungselement als vorgetränktes oder ungetränktes Faserhalbzeug zwischen der Trägerfläche und dem Fasergelege angeordnet. Durch gemeinsames Infiltrieren des Versteifungselements und der Wandung des röhrenförmigen Strukturbauteils sowie durch gemeinsames Aushärten wird das Versteifungselement angebunden.

Gemäß einer anderen bevorzugten Weiterbildung wird das Versteifungselement als vorausgehärtetes Faserhalbzeug zwischen der Trägerfläche und dem Fasergelege angeordnet. Dies ermöglicht die Verklebung (Co-Bonding) des Versteifungselements mit der Wandung des röhrenförmigen Strukturbauteils, wobei z.B. die aushärtbare Matrix, mit der das schlauchförmige Fasergelege infiltriert wird, als Kleber dient.

Erfindungsgemäß wird das Versteifungselement in einer entsprechend ausgebildeten Vertiefung der Trägerfläche angeordnet. Dies erleichtert das Beschicken des Trägers mit dem Versteifungselement.

Gemäß einer bevorzugten Weiterbildung wird ein Platzhalter in einem Hohlraum zwischen dem Versteifungselement und dem schlauchförmigen Fasergelege angeordnet. Dieser Platzhalter hält während des Aushärtevorgangs, wenn das Versteifungselement dem gegenseitigen Druck der Trägerfläche und der Innenfläche des Formwerkzeugs ausgesetzt ist, den gewünschten Hohlraum des Versteifungselements frei. Vorzugsweise weist der Platzhalter eine Membranhülle auf, wobei weiterhin ein Schritt des Expandierens des Platzhalters durch Erhöhen eines Drucks in der Membranhülle vorgesehen ist. Ein derartig expandierbarer Platzhalter kann nach dem Aushärtevorgang wieder geschrumpft und daher leicht entfernt werden.

Gemäß einer bevorzugten Weiterbildung der erfindungsgemäßen Vorrichtung ist mindestens ein Führungsdeckel zur Anbringung an mindestens einem Ende des Formwerkzeugs und/oder des Trägers vorgesehen. Der Führungsdeckel weist einen in einer radialen Richtung des röhrenförmigen Formwerkzeugs verlaufenden Führungsschlitz zur Führung des Versteifungselements auf. Durch den Führungsschlitz werden während des Expandierens des Trägers das Versteifungselement unabhängig von seiner Form und der Form der Trägerfläche präzise in radialer Richtung an die gewünschte Position an der Innenseite des Strukturbauteils geführt.

Die Erfindung wird im Folgenden anhand von Ausführungsbeispielen unter Bezugnahme auf die beiliegenden Figuren der Zeichnung näher erläutert.

Von den Figuren zeigen:
- Fig. 1A-C: schematische Perspektivansichten einer Vorrichtung zur Herstellung einer Rumpftonnensektion eines Flugzeugs;
- Fig. 2A-G: ausschnitthafte Querschnittsansichten einer Vorrichtung gemäß einer Ausführungsform, bei der Herstellung eines röhrenförmigen Strukturbauteils; und
- Fig. 3A-D: ausschnitthafte Querschnittsansichten einer Vorrichtung gemäß einer Ausführungsform, bei der Herstellung eines röhrenförmigen Strukturbauteils.

In den Figuren bezeichnen dieselben Bezugszeichen gleiche oder funktionsgleiche Komponenten, soweit nichts Gegenteiliges angegeben ist.

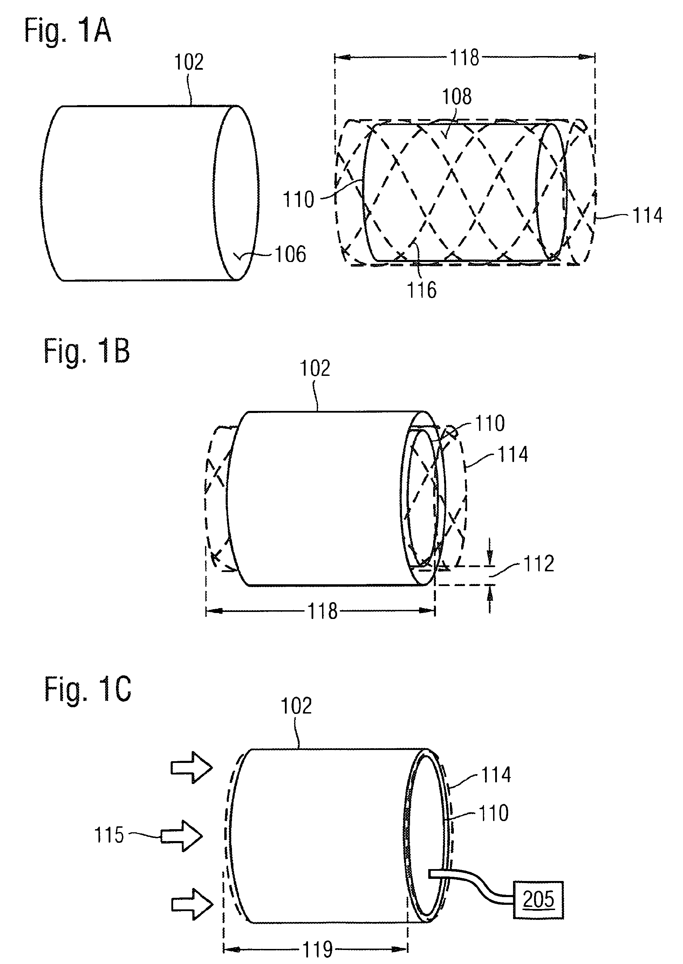

Figur 1A bis 1C zeigt in drei schematischen Perspektivansichten eine Vorrichtung zur Herstellung einer Rumpftonnensektion eines Flugzeugs, wobei in jeder der drei Figuren unterschiedliche Schritte eines Herstellungsverfahrens dargestellt sind. Die herzustellende Rumpftonnensektion hat angenähert die Form eines Zylindermantels, wobei der Querschnitt typischerweise von der idealen Kreisform abweicht und sich über die Länge der Sektion verändert.

In Fig. 1A dargestellt ist ein röhrenförmiges Formwerkzeug 102, mit einer Innenfläche 106, die entsprechend der gewünschten Form der Außenfläche der herzustellenden Rumpftonnensektion geformt ist. Das Formwerkzeug 102 ist ein sogenanntes Negativwerkzeug, da seine Innenfläche 106 eine Negativform zur Außenfläche der Rumpftonnensektion bildet. Neben dem Formwerkzeug 102 befindet sich ein Träger 110 zum Tragen eines schlauchförmigen Fasergeleges 114.

Der Träger 110 ist annähernd zylindrisch geformt, mit etwa der gleichen Länge wie das Formwerkzeug 102 und einem Außendurchmesser, der etwas geringer ist als der Innendurchmesser des Formwerkzeugs. Dadurch lässt er sich sowohl innerhalb des Formwerkzeugs 102 als auch außerhalb anordnen. Der Träger 110 umfasst ein inneres Gerüst, das die gezeigte Form festlegt, und ist an seiner Mantelfläche 108 mit einer elastischen Druckmembran überzogen, die einen Innenbereich des Trägers druckdicht vom Außenraum trennt. Zum leichten, berührungslosen Ineinanderschieben können der Träger und/oder das Formwerkzeug z.B. mit hier nicht gezeigten Rollen versehen sein.

Die Oberfläche der um die Mantelfläche 108 des angenähert zylindrischen Trägers 110 angeordnete Druckmembran bildet eine Trägerfläche 108, die bei der Herstellung der Rumpftonnensektion das schlauchförmige Fasergelege 114 trägt. Zu Beginn des Herstellungsverfahrens wird der Träger 110 außerhalb des Formwerkzeugs 102 angeordnet. Das schlauchförmige Fasergelege 114 wird zugeschnitten und über den Träger 110 gezogen, bis es die Trägerfläche 108 vollständig bedeckt. Als Fasergelege 114 wird z.B. ein nicht gewebtes Gelege wie z.B. sogenanntes NCF (Non-Crimped Fabric) aus Kohlenstofffasern oder anderen geeigneten Fasern verwendet, das entsprechend konstruktiven Details der herzustellenden Rumpfsektion lokal verstärkt sein kann. Das Fasergelege 114 umfasst mehrere Faserlagen unterschiedlicher Orientierung, in denen die Fasern 116 wie beispielhaft gezeigt diagonal, d.h. schraubenförmig um den Umfang des Trägers 110 verlaufen. In weiteren, nicht gezeigten Faserlagen verlaufen Fasern in anderen Neigungswinkeln diagonal oder parallel zur Längsrichtung des Trägers 110.

Die Länge 118 des zugeschnittenen schlauchförmigen Fasergeleges 114 ist größer als die Länge des Trägers 110 und des Formwerkzeugs 102, so dass das Fasergelege 114 die Trägerfläche 108 des Trägers 110 nicht nur bedeckt, sondern an beiden Enden des Trägers 110 über diesen hinausragt.

Figur 1B zeigt einen nachfolgenden Schritt des Herstellungsverfahrens, in dem der von dem Fasergelege 114 bedeckte Träger 110 in das Formwerkzeug 102 bewegt wurde. Da der Durchmesser des Trägers 110 kleiner ist als der Innendurchmesser des Formwerkzeugs 102, passt der Träger 110 in das Formwerkzeug 102, ohne dass die Trägerfläche 108 die Innenfläche 106 des Formwerkzeugs berührt. Vielmehr verlaufen die Trägerfläche 108 und die Innenfläche 106 des Formwerkzeugs 102 annähernd parallel, wobei zwischen ihnen an jedem Ort ein Mindestabstand 112 von z.B. 5-10 cm verbleibt. Das die Trägerfläche 108 bedeckende Fasergelege 114 ragt aufgrund seiner Länge 118 beidseitig aus dem Formwerkzeug 102 heraus.

Figur 1C zeigt einen weiteren Schritt des Herstellungsverfahrens, in dem im Innenbereich des Trägers 110 mittels eines Kompressors 205 ein Überdruck erzeugt wurde. Die die Trägerfläche bildende Druckmembran des Trägers ist durch den Überdruck aufgebläht, so dass der Träger 110 über die Abmessungen seines inneren Gerüsts hinaus radial expandiert ist. Durch die radiale Expansion des Trägers 110 ist das schlauchförmige Fasergelege 114 in Richtung des Umfangs des Trägers 110 gedehnt. Gleichzeitig hat es sich aufgrund der diagonal um den Träger verlaufenden Fasern 116 in seiner Längsrichtung bis auf eine verkürzte Länge 119 kontrahiert. Dabei wurde das schlauchförmige Fasergelege 114 anfänglich gerade so reichlich zugeschnitten, dass es auch mit der verkürzten Länge die Trägerfläche noch vollständig bedeckt.

Im gezeigten expandierten Zustand des Trägers 110 presst die Druckmembran das Fasergelege 114 aufgrund des Überdrucks im Innenbereich des Trägers 110 gegen die Innenfläche 106 des Formwerkzeugs. In einem weiteren Schritt wird das so fixierte Fasergelege mit einer flüssigen, aushärtbaren Harzmatrix 115 infiltriert, z.B. indem die Harzmatrix von einem Ende des Formwerkzeugs 102 her wie durch Pfeile angedeutet in den Zwischenraum zwischen der Druckmembran und dem Formwerkzeug 102 eingefüllt wird.

Anschließend wird die Harzmatrix ausgehärtet, z.B. durch eine Wärmebehandlung. Der Überdruck wird aus dem Innenbereich des Trägers 110 abgelassen, sodass der Träger 110 in seinen ursprünglichen, nicht expandierten Zustand zurückkehrt und leicht aus dem Formwerkzeug 102 entfernt werden kann. Die fertige Rumpftonnensektion wird aus dem Formwerkzeug 102 entnommen. Sich zu einem Ende hin verjüngend geformte Sektionen werden z.B. in Richtung des weiteren Endes aus dem Formwerkzeug 102 entnommen. Alternativ kann das Formwerkzeug 102 zwei- oder mehrteilig ausgeführt sein, sodass es sich zur Entnahme der fertigen Sektion öffnen lässt.

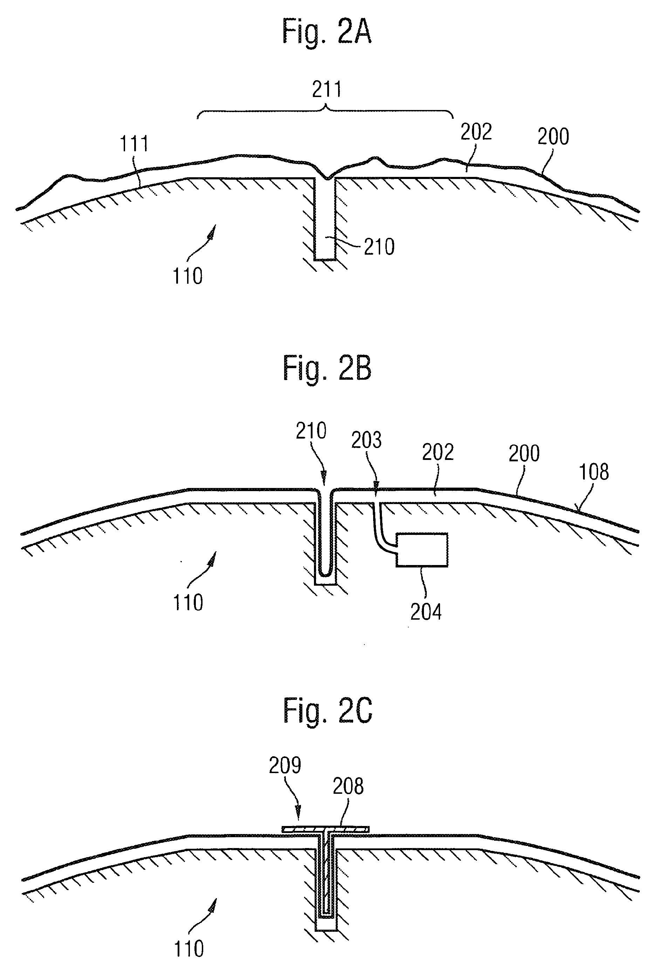

Eine weitere Ausführungsform des Herstellungsverfahrens soll nun anhand der Figur 2A-G in größerem Detail erläutert werden. Die Figuren 2A-G zeigen jeweils für unterschiedliche Verfahrensschritte einen Ausschnitt der Peripherie des Trägers 110 in Querschnittsansicht.

Figur 2A zeigt den genannten Ausschnitt des Trägers 110 in einem Anfangszustand, in dem noch kein Fasergelege auf der Trägerfläche 108 angeordnet ist und der Träger 110 sich außerhalb des Formwerkzeugs 102 befindet. Der Träger 110 umfasst ein starres Trägergerüst 111 mit im wesentlichen kreisförmigem Querschnitt. Das Trägergerüst 111 ist z.B. aus Aluminium gebildet und weist an seiner Oberfläche eine Vielzahl kleiner Bohrungen zur Beaufschlagung mit Unter- und/oder Überdruck auf, die hier der Übersichtlichkeit halber nicht gezeigt sind. An einer Stelle seines Umfangs ist eine schlitzartige Vertiefung 210 zur späteren Aufnahme eines Versteifungselements ausgebildet. In einem Randbereich 211 zu beiden Seiten der Vertiefung 210 ist der Umfang des Trägergerüsts 111 abgeflacht.

Die Oberfläche des Trägergerüsts 111 ist von einer Druckmembran 200 bedeckt, die sich über die gesamte Mantelfläche des im Ganzen annähernd zylinderförmigen Trägergerüsts 111 erstreckt und an den Rändern der Mantelfläche mit der Oberfläche des Trägergerüsts 111 druckdicht verbunden ist. Zwischen der Druckmembran 200 und dem Trägergerüst 111 ist somit ein Innenbereich 202 druckdicht gegenüber dem Außenraum abgeschlossen. Die Druckmembran 200 ist z.B. als Kunststofffolie ausgeführt.

Figur 2B zeigt einen Zustand des Trägers 110 aus Fig. 2A, nachdem eine Vakuumpumpe 204 über die feinen Bohrungen 203 in der Oberfläche des Trägergerüsts 111, von denen hier nur eine einzige Bohrung 203 beispielhaft gezeigt ist, mit dem Innenraum 202 verbunden wurde und diesen evakuiert hat. Durch den Unterdruck im Innenraum 202 ist die Druckmembran straff an das Trägergerüst 111 gesaugt worden. Insbesondere folgt die Druckmembran der Kontur des Trägergerüsts 111 bis in die Vertiefung 210 hinein.

In Fig. 2C ist nunmehr ein Versteifungselement 208 mit T-förmigem Profil, wie er z.B. im Flugzeugbau als so genannter T-Stringer verwendet wird, in die Vertiefung 210 eingesetzt worden. Der waagerechte Balken 209 des T-Profils liegt innerhalb der Abflachung 211 auf dem von der Druckmembran 200 bedeckten Trägergerüst 111 auf.

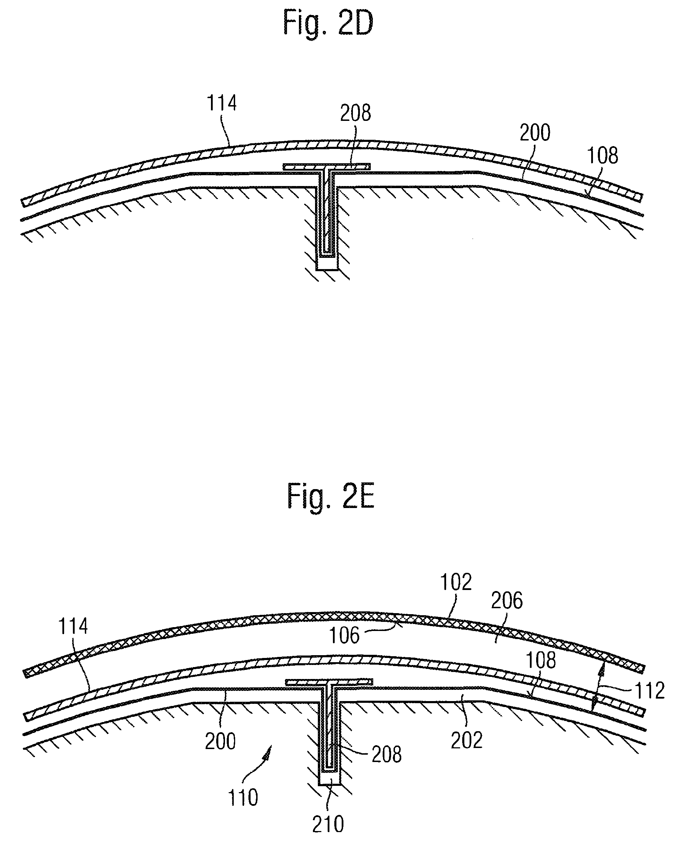

In Fig. 2D ist die Druckmembran 200 von einem schlauchförmigen Fasergelege 114 aus Kohlenstofffasern bedeckt worden. Die äußere Oberfläche 108 der Druckmembran 200 fungiert als die das Fasergelege 114 tragende Trägerfläche 108 des Trägers 110. Das Versteifungselement 208 ist zwischen der Trägerfläche 108 und dem Fasergelege 114 eingeschlossen und in der Vertiefung 210 gehalten. Da auch der waagerechte Balken 209 des T-Profils innerhalb der Abflachung 211 verborgen liegt, weist das Fasergelege 114 oberhalb des Versteifungselements 208 keine Ausbuchtung auf, sondern folgt einer sanften Krümmung.

Figur 2E zeigt den so vorbereiteten und mit dem Versteifungselement 208 und dem Fasergelege 114 beschickten Träger 110, nachdem er in ein röhrenförmiges Formwerkzeug 102 geschoben wurde. Der Träger 110 ist soweit kleiner als der Innenraum des Formwerkzeugs 102 und entsprechend dessen Form ausgebildet, dass zwischen seiner Trägerfläche 108 und der Formfläche 106 des Formwerkzeugs stets ein Abstand 112 verbleibt. Mit anderen Worten verlaufen die Trägerfläche 108 und die Formfläche 106 im gezeigten Zustand parallel im Abstand 112 zueinander. Das Fasergelege 114 und die Druckmembran 200 sowie die Druckmembran und das Trägergerüst 111 dagegen berühren einander und sind nur der übersichtlichen Darstellung halber in Fig. 2B-E beabstandet gezeigt.

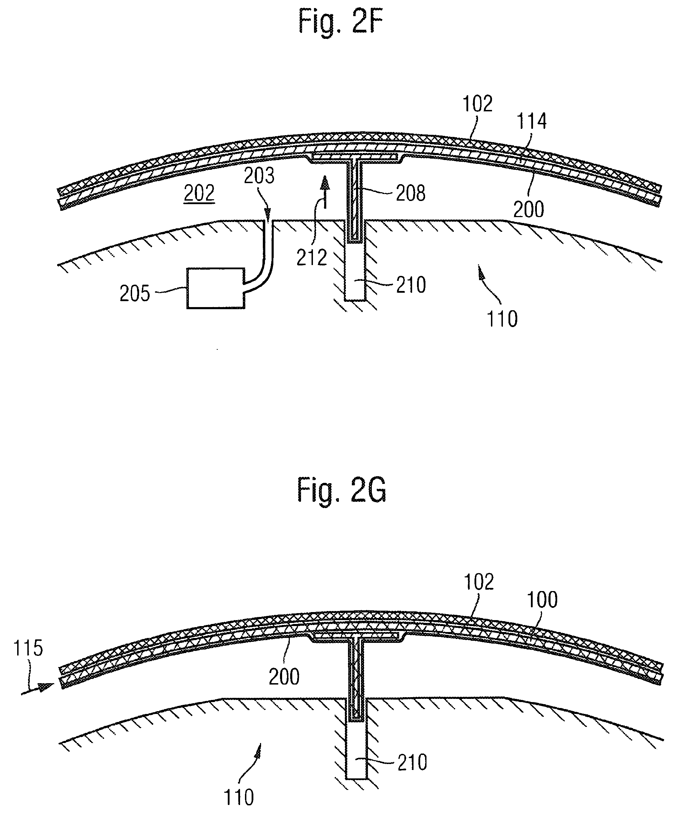

Figur 2F zeigt den im Formwerkzeug 102 angeordneten Träger 110, nachdem der Innenraum 202 zwischen dem Trägergestell 111 und der Druckmembran 200 mit einem Kompressor 205 verbunden und durch die feinen Bohrungen 203 mit Überdruck beaufschlagt wurde. Der Überdruck hat die Druckmembran 200 aufgebläht, so dass sie in radialer Richtung 212 bis zur Formfläche 106 des Formwerkzeugs 102 expandiert ist. Sowohl die Druckmembran als auch das Fasergelege sind durch die Expansion gedehnt worden. Das Versteifungselement 208 und das Fasergelege 114 sind durch die expandierende Druckmembran 200 zur Formfläche 106 geführt worden und werden im gezeigten Zustand mit gleichmäßigem, durch den Überdruck gegebenen Anpressdruck gegen diese gepresst. Das Versteifungselement 208 ist während des Expansionsvorgangs durch die Vertiefung 210 in radialer Richtung 212 geführt worden und ist auch im gezeigten Zustand noch in der Vertiefung 210 wie in einem Führungsschlitz gehalten und damit präzise positioniert.

Figur 2G zeigt einen Zustand, nachdem der Raum zwischen der Druckmembran 200 und dem Formwerkzeug 102 mit einem aushärtbaren Matrixsystem 115 verfüllt wurde. Die Matrix 115 hat wie durch Schraffur angedeutet sowohl das Fasergelege 114 als auch den Faserwerkstoff des Versteifungselements 208 infiltriert. Während des anschließenden Aushärtens durch Wärmebehandlung wird der Überdruck im Innenbereich 202 des Trägers 110 aufrechterhalten. Anschließend wird der Überdruck ausgelassen und die fertige Rumpftonnensektion 100 dem Formwerkzeug 102 entnommen.

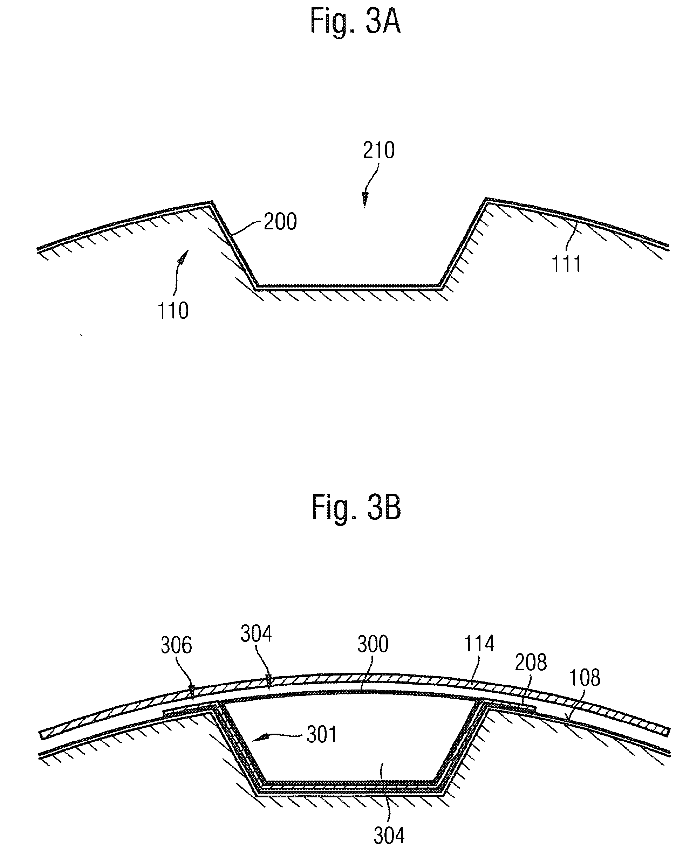

Noch eine weitere Ausführungsform des Herstellungsverfahrens ist in Figur 3A-D dargestellt. Die Figuren zeigen wieder jeweils für unterschiedliche Verfahrensschritte einen Ausschnitt der Peripherie des Trägers 110 in Querschnittsansicht.

Figur 3A zeigt einen Zustand entsprechend Fig. 2B, in dem eine Druckmembran 200 straff entlang der Oberfläche eines Trägergerüsts 111 angeordnet wurde, z.B. ebenfalls durch Evakuieren des dazwischen liegenden Innenbereichs des Trägers. Wie in der vorstehenden Ausführungsform ist im Trägergerüst 111 eine Vertiefung 210 für ein Versteifungselement ausgebildet, die allerdings hier die Form einer breiten, trapezförmigen Wanne aufweist.

Im in Fig. 3B gezeigten Zustand ist in der Vertiefung 210 ein aus Prepreg gebildetes Versteifungselement 208 mit Ω-Profil, ein so genannter Ω-Stringer, in der Vertiefung 210 angeordnet worden. Ein in der fertigen Rumpftonnensektion unter dem Q-Profil des Stringers 208 auszubildender Hohlraum 304 ist hier durch einen Platzhalter 300 ausgefüllt, der hier beispielhaft aus einer mit Druckluft gefüllten Membranhülle 301 gebildet ist. Ein schlauchförmiges Fasergelege 114 bedeckt die von der Druckmembran 200 gebildete Trägerfläche 108, die Fußabschnitte 306 des O-Stringers und die nach außen gewandte Seite des Platzhalters 300.

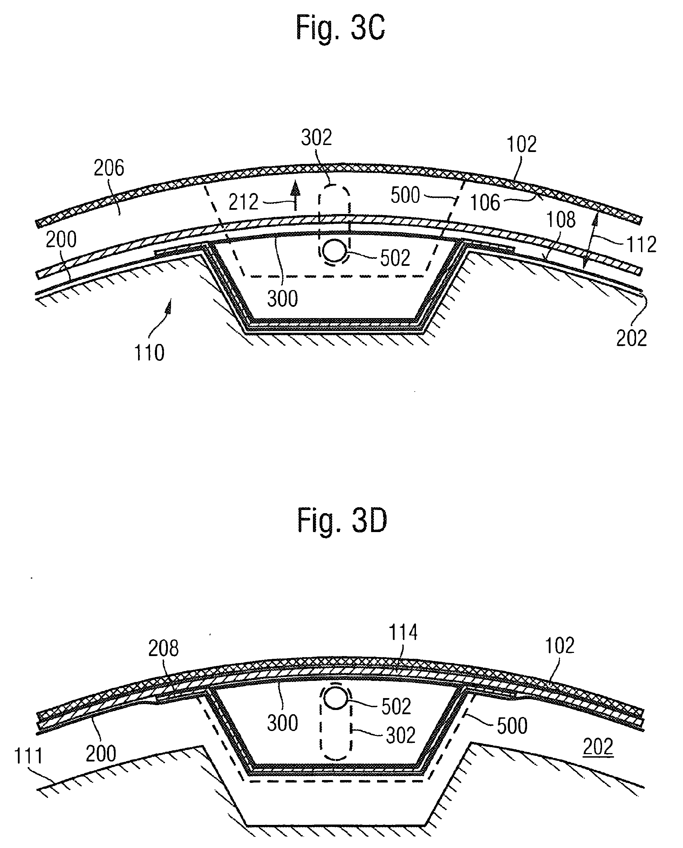

In dem in Fig. 3C gezeigten Zustand wurde der solcherart präparierte Träger 110 in einem röhrenförmigen Formwerkzeug 102 angeordnet. Zwischen der Trägerfläche 106 und der Formfläche verbleibt wie in der vorstehend beschriebenen Ausführungsform ein Expansionsabstand 112. Um den Träger 110 zu expandieren, wird dessen Innenbereich 202 mit Überdruck und/oder der zwischen der Druckmembran 200 und dem Formwerkzeug 102 liegende Zwischenbereich 206 mit Unterdruck beaufschlagt. Um während des Expandierens den O-Stringer 208 präzise in radialer Richtung 212 führen zu können, ist an den beiden Enden des O-Stringers 208 ein Führungsstift 502 im Platzhalter 300 verankert. Dieser gleitet in einem radial 212 verlaufenden Führungsschlitz 302, der in einem jeweils an den Enden des Formwerkzeugs 102 angebrachten Führungsdeckel 500 ausgespart ist.

Figur 3D zeigt einen Zustand, in dem die Druckmembran durch die angelegte Druckdifferenz zwischen Innen- 202 und Zwischenbereich 206 das schlauchförmige Fasergelege 114 mitsamt dem O-Stringer 208 und dem eingeschlossenen Platzhalter 300 gegen die Innenfläche 106 des Formwerkzeugs 102 presst. In nachfolgenden Schritten werden das Fasergelege 114 und der O-Stringer 208 gemeinsam mit einer Harzmatrix infiltriert und ausgehärtet. Dabei verbinden sich die eingeleitete Matrix und das im Prepreg des O-Stringers 208 enthaltene Harzmaterial. Nach einer Wärmebehandlung zur Aushärtung werden der Überdruck im Innenbereich 202 bzw. der Unterdruck im Zwischenbereich 206 ausgelassen und die ausgehärtete Rumpftonnensektion aus dem Formwerkzeug 102 entfernt. Der Platzhalter 300 wird, nachdem der Überdruck in seinem Inneren ebenfalls ausgelassen wurde, unter dem O-Stringer 208 entfernt, um dessen Hohlraum 304 freizugeben.

Obwohl die vorliegende Erfindung anhand bevorzugter Ausführungsbeispiele vorliegend beschrieben wurde, ist sie darauf nicht beschränkt, sondern auf vielfältige Weise modifizierbar.

Beispielsweise können Versteifungselemente vielfältiger anderer Profile verwendet werden. Rumpftonnensektionen und andere röhrenförmige Strukturbauteile mit komplexen, sich verjüngenden Querschnitten, Tür- und Fensteröffnungen können hergestellt werden.

### Bezugszeichenliste

- 100: Strukturbauteil
- 102: Formwerkzeug
- 104: Außenfläche
- 106: Formfläche
- 108: Trägerfläche
- 110: Träger
- 111: Gerüst
- 112: Expansionsabstand
- 114: Fasergelege
- 115: Matrix
- 116: Fasern
- 118: Länge des Fasergeleges vor Expansion
- 119: Länge des Fasergeleges nach Expansion
- 200: Druckmembran
- 202: Innenbereich
- '203: Bohrung
- 204: Vakuumpumpe
- 205: Kompressor
- 206: Zwischenbereich
- 208: Versteifungselement
- 209: Waagerechter Abschnitt
- 210: Vertiefung
- 211: Abflachung
- 212: Radiale Richtung
- 300: Platzhalter
- 301: Membranhülle
- 302: Führungsschlitz
- 304: Hohlraum
- 306: Fußabschnitt
- 500: Führungsdeckel
- 502: Führungsstift

## Patentansprüche

1. Verfahren zur Herstellung eines röhrenförmigen Strukturbauteils (100), mit den Schritten:
Bereitstellen eines röhrenförmigen Formwerkzeugs (102), welches eine entsprechend einer Außenfläche (104) des Strukturbauteils (100) geformte innere Formfläche (106) aufweist;
Bereitstellen eines Trägers (110) mit einem Trägergerüst (111) und einer expandierbaren Druckmembran (200), welche derart geformt ist, dass sie in einem nicht expandierten Zustand das Formwerkzeug (102) unter Belassen eines Expansionsabstands (112) zwischen einer durch die äußere Oberfläche der Druckmembran (200) gebildeten Trägerfläche (108) zur Formfläche (106) ausfüllt;
Bedecken der Trägerfläche (108) mit einem schlauchförmigen Fasergelege (114), sodass Fasern (116) einer Faserlage des Fasergeleges (114) diagonal um den Träger (110) verlaufen;
Einlegen eines Versteifungselements (208) zwischen der Trägerfläche (108) und dem Fasergelege (114) in eine Vertiefung (210) des Trägergerüsts (111);
Anordnen des Trägers (110) im Formwerkzeug (102);
Expandieren der Druckmembran (200) derart, dass die Trägerfläche (108) das Fasergelege (114) radial expandiert und gegen die Formfläche (106) presst;
Führen (210; 302) des Versteifungselements (208), während des Expandierens der Druckmembran (200), in einer radialen Richtung (212) des Formwerkzeugs (102); und
Infiltrieren des Fasergeleges (114) mit einer aushärtbaren Matrix (115).

2. Verfahren nach Anspruch 1,
**dadurch gekennzeichnet,**
**dass** das schlauchförmige Fasergelege (114) nach dem Bedecken des Trägers (110) eine größere Länge (118) aufweist als das Strukturbauteil (100).

3. Verfahren nach Anspruch 1 oder 2,
**dadurch gekennzeichnet,**
**dass** das Expandieren des Trägers (110) durch Erzeugen einer Druckdifferenz zwischen einem Innenbereich (202) des Trägers (110) und einem Zwischenbereich (206) zwischen der Druckmembran (200) und dem Formwerkzeug (102) erfolgt.

4. Verfahren nach Anspruch 3,
**dadurch gekennzeichnet,**
**dass** zum Erzeugen der Druckdifferenz der Druck im Innenbereich (202) des Trägers (110) über den Atmosphärendruck hinaus erhöht wird.

5. Verfahren nach Anspruch 3 oder 4,
**dadurch gekennzeichnet,**
**dass** zum Erzeugen der Druckdifferenz der Druck im Zwischenbereich (206) unter den Atmosphärendruck abgesenkt wird.

6. Verfahren nach wenigstens einem der vorhergehenden Ansprüche,
**dadurch gekennzeichnet,**
**dass** das Versteifungselement (208) als vorgetränktes oder ungetränktes Faserhalbzeug zwischen der Trägerfläche (108) und dem Fasergelege (114) angeordnet wird.

7. Verfahren nach wenigstens einem der Ansprüche 1 bis 4,
**dadurch gekennzeichnet,**
**dass** das Versteifungselement (208) als vorausgehärtetes Faserhalbzeug zwischen der Trägerfläche (108) und dem Fasergelege (114) angeordnet wird.

8. Verfahren nach wenigstens einem der vorhergehenden Ansprüche,
**dadurch gekennzeichnet,**
**dass** weiterhin ein Platzhalter (300) in einem Hohlraum (304) zwischen dem Versteifungselement (208) und dem schlauchförmigen Fasergelege (114) angeordnet wird.

9. Verfahren nach Anspruch 8,
**dadurch gekennzeichnet,**
**dass** der Platzhalter (300) eine Membranhülle (301) aufweist und weiterhin ein Schritt des Expandierens des Platzhalters (300) durch Erhöhen eines Drucks in der Membranhülle (301) vorgesehen ist.

10. Vorrichtung zur Herstellung eines röhrenförmigen Strukturbauteils (100), mit:
einem röhrenförmigen Formwerkzeug (102), welches eine entsprechend einer Außenfläche (104) des Strukturbauteils (100) geformte innere Formfläche (106) aufweist;
einem Träger (110) mit einem Trägergerüst (111) und einer expandierbaren Druckmembran (200), welche derart geformt ist, dass sie in einem nicht expandierten Zustand das Formwerkzeug (102) unter Belassen eines Expansionsabstands (112) zwischen einer durch die äußere Oberfläche der Druckmembran (200) gebildeten Trägerfläche (108) des Trägers (110) und der Formfläche (106) ausfüllt, wobei das Trägergerüst (111) eine Vertiefung (210) zum Einlegen eines Versteifungselements (208) umfasst;
einem Mittel zum Expandieren der Druckmembran (200) derart, dass bei Bedeckung der Trägerfläche (108) mit einem schlauchförmigen Fasergelege (114) und Anordnung des Trägers (110) im Formwerkzeug (102) die Trägerfläche (108) das Fasergelege (114) radial expandiert und gegen die Formfläche (106) presst;
einem Mittel zum Führen (210; 302) des Versteifungselements (208), während des Expandierens der Druckmembran (200), in einer radialen Richtung (212) des Formwerkzeugs (102); und
einem Mittel zum Infiltrieren des Fasergeleges (114) mit einer aushärtbaren Matrix (115).

11. Vorrichtung nach Anspruch 10,
**dadurch gekennzeichnet,**
**dass** der Expansionsabstand (112) 1 cm bis 10 cm beträgt.

12. Vorrichtung nach Anspruch 10 oder 11,
**dadurch gekennzeichnet,**
**dass** das Mittel zum Expandieren dazu ausgebildet ist, eine Druckdifferenz zwischen einem Innenbereich (202) des Trägers (110) und einem Zwischenbereich (206) zwischen der Druckmembran (200) und dem Formwerkzeug (102) zu erzeugen.

13. Vorrichtung nach Anspruch 12,
**dadurch gekennzeichnet,**
**dass** das Mittel zum Expandieren einen Kompressor (205) zum Erhöhen eines Drucks im Innenbereich (202) des Trägers (110) über den Atmosphärendruck hinaus umfasst.

14. Vorrichtung nach Anspruch 12,
**dadurch gekennzeichnet,**
**dass** das Mittel zum Expandieren eine Vakuumpumpe zum Absenken eines Drucks im Zwischenbereich (206) unter den Atmosphärendruck umfasst.

15. Vorrichtung nach wenigstens einem der Ansprüche 10 bis 14,
**dadurch gekennzeichnet,**
**dass** das Mittel zum Führen (210; 302) mindestens einen Führungsdeckel (500) zur Anbringung an mindestens einem Ende des Formwerkzeugs (102) und/oder des Trägers (110) umfasst, wobei der Führungsdeckel (500) einen in einer radialen Richtung (212) des röhrenförmigen Formwerkzeugs (102) verlaufenden Führungsschlitz (302) zur Führung des Versteifungselements (208) aufweist.

## Claims

1. Method for producing a tubular structural component (100), comprising the steps of:
providing a tubular moulding tool (102) which has an inner mould surface (106) shaped corresponding to an outer surface (104) of the structural component (100);
providing a support (110) with a support frame (111) and an expandable pressure membrane (200) which is shaped such that, in an unexpanded state, the pressure membrane fills the moulding tool (102) leaving an expansion spacing (112) between a support surface (108), which is formed by the outer surface of the pressure membrane (200), and the mould surface (106);
covering the support surface (108) with a tubular non-crimp fibre fabric (114), such that fibres (116) of a fibre layer of the non-crimp fibre fabric (114) run diagonally around the support (110);
inserting a reinforcing element (208) between the support surface (108) and the non-crimp fibre fabric (114) into a recess (210) of the support frame (111);
arranging the support (110) in the moulding tool (102);
expanding the pressure membrane (200) such that the support surface (108) radially expands the non-crimp fibre fabric (114) and presses it against the mould surface (106);
guiding (210; 302) the reinforcing element (208), during the expansion of the pressure membrane (200), in a radial direction (212) of the moulding tool (102); and infiltrating the non-crimp fibre fabric (114) with a curable matrix (115).

2. Method as claimed in claim 1,
**characterised in that**
after the support (110) has been covered, the tubular non-crimp fibre fabric (114) has a longer length (118) than the structural component (100).

3. Method as claimed in claim 1 or 2,
**characterised in that**
the support (110) is expanded by producing a pressure differential between an inner region (202) of the support (110) and an intermediate region (206) between the pressure membrane (200) and the moulding tool (102).

4. Method as claimed in claim 3,
**characterised in that**
in order to produce the pressure differential, the pressure in the inner region (202) of the support (110) is increased beyond atmospheric pressure.

5. Method as claimed in claim 3 or 4,
**characterised in that**
in order to produce the pressure differential, the pressure in the intermediate region (206) is reduced below atmospheric pressure.

6. Method as claimed in at least one of the preceding claims,
**characterised in that**
the reinforcing element (208), as a pre-impregnated or non-impregnated semi-finished fibre product, is arranged between the support surface (108) and the non-crimp fibre fabric (114).

7. Method as claimed in at least one of claims 1 to 4,
**characterised in that**
the reinforcing element (208), as a pre-cured semi-finished fibre product, is arranged between the support surface (108) and the non-crimp fibre fabric (114).

8. Method as claimed in any one of the preceding claims,
**characterised in that**
furthermore a placeholder (300) is arranged in a cavity (304) between the reinforcing element (208) and the tubular non-crimp fibre fabric (114).

9. Method as claimed in claim 8,
**characterised in that**
the placeholder (300) has a membrane sheath (301) and furthermore a step of expanding the placeholder (300) by increasing a pressure in the membrane sheath (301) is provided.

10. Device for producing a tubular structural component (100), comprising:
a tubular moulding tool (102) which has an inner mould surface (106) shaped corresponding to an outer surface (104) of the structural component (100);
a support (110) having a support frame (111) and an expandable pressure membrane (200) which is shaped such that, in an unexpanded state, the pressure membrane fills the moulding tool (102) leaving an expansion spacing (112) between a support surface (108) of the support (110), which support surface is formed by the outer surface of the pressure membrane (200), and the mould surface (106), wherein the support frame (111) has a recess (210) for inserting a reinforcing element (208) ;
a means for expanding the pressure membrane (200) such that when the support surface (108) is covered with a tubular non-crimp fibre fabric (114) and when the support (110) is arranged in the moulding tool (102), the support surface (108) radially expands the non-crimp fibre fabric (114) and presses it against the mould surface (106);
a means for guiding (210; 302) the reinforcing element (208), during the expansion of the pressure membrane (200), in a radial direction (212) of the moulding tool (102); and
a means for infiltrating the non-crimp fibre fabric (114) with a curable matrix (115).

11. Device as claimed in claim 10,
**characterised in that**
the expansion spacing (112) amounts to 1 cm to 10 cm.

12. Device as claimed in claim 10 or 11,
**characterised in that**
the expansion means is formed in order to produce a pressure differential between an inner region (202) of the support (110) and an intermediate region (206) between the pressure membrane (200) and the moulding tool (102).

13. Device as claimed in claim 12,
**characterised in that**
the expansion means comprises a compressor (205) for increasing a pressure in the inner region (202) of the support (110) beyond atmospheric pressure.

14. Device as claimed in claim 12,
**characterised in that**
the expansion means comprises a vacuum pump for reducing a pressure in the intermediate region (206) below atmospheric pressure.

15. Device as claimed in at least one of claims 10 to 14,
**characterised in that**
the guiding means (210; 302) comprises at least one guide cover (500) for attaching to at least one end of the moulding tool (102) and/or of the support (110), wherein the guide cover (500) has a guide slot (302), which extends in a radial direction (212) of the tubular moulding tool (102), for guiding the reinforcing element (208).

## Revendications

1. Procédé de fabrication d'un élément structurel (100) tubulaire, comprenant les étapes de :
fourniture d'un moule (102) tubulaire, qui présente une surface de formage (106) intérieure formée conformément à une surface extérieure (104) de l'élément structurel (100) ;
fourniture d'un support (110) comportant une ossature portante (111) et une membrane de pression expansible (200), formée de telle manière qu'elle remplit dans un état non expansé le moule (102) en laissant une distance d'expansion (112) entre une surface portante (108) formée par la surface extérieure de la membrane de pression (200) et la surface de formage (106),
recouvrement de la surface portante (108) avec une structure fibreuse (114) en forme de tuyau, de telle sorte que des fibres (116) d'une couche de fibres d'une structure fibreuse (114) s'étendent diagonalement autour du support (110) ;
insertion d'un élément raidisseur (208) entre la surface portante (108) et la structure fibreuse (114) dans un renfoncement (210) de l'ossature portante (111) ;
disposition du support (110) à l'intérieur du moule (102) ;
expansion de la membrane de pression (200) de telle manière que la surface portante (108) étend radialement la structure fibreuse (114) et l'appuie contre la surface de formage (106) ;
guidage (210 ; 302) de l'élément raidisseur (208), pendant l'expansion de la membrane de pression (200), dans une direction radiale (212) du moule (102) ; et
infiltration de la structure fibreuse (114) avec une matrice durcissable (115).

2. Procédé selon la revendication 1,
**caractérisé par le fait que**
la structure fibreuse (114) en forme de tuyau présente après le recouvrement du support (110) une longueur (118) plus grande que l'élément structurel (100).

3. Procédé selon la revendication 1 ou 2,
**caractérisé par le fait que**
l'expansion du support (110) s'effectue en générant une différence de pression entre une zone intérieure (202) du support (110) et une zone intermédiaire (206) entre la membrane de pression (200) et le moule (102).

4. Procédé selon la revendication 3,
**caractérisé par le fait que**
la pression est relevée à l'intérieur de la zone intérieure (202) du support (110) au-delà de la pression atmosphérique pour générer la différence de pression.

5. Procédé selon la revendication 3 ou 4,
**caractérisé par le fait que**
la pression est abaissée à l'intérieur de la zone intermédiaire (206) en deçà de la pression atmosphérique pour générer la différence de pression.

6. Procédé selon au moins l'une des revendications précédentes,
**caractérisé par le fait que**
l'élément raidisseur (208) est disposé en tant que produit semi-fini en fibres préimprégné ou non imprégné entre la surface portante (108) et la structure fibreuse (114).

7. Procédé selon au moins l'une des revendications 1 à 4,
**caractérisé par le fait que**
l'élément raidisseur (208) est disposé en tant que produit semi-fini en fibres prédurci entre la surface portante (108) et la structure fibreuse (114).

8. Procédé selon au moins l'une des revendications précédentes,
**caractérisé par le fait que**
un repère de position (300) est en outre disposé dans une cavité (304) entre l'élément raidisseur (208) et la structure fibreuse (114) en forme de tuyau.

9. Procédé selon la revendication 8,
**caractérisé par le fait que**
le repère de position (300) présente une gaine de membrane (301) et qu'une étape de l'expansion du repère de position (300) est en outre prévue en augmentant la pression dans la gaine de membrane (301).

10. Dispositif de fabrication d'un élément structurel (100) tubulaire, comportant :
un moule (102) tubulaire, qui présente une surface de formage (106) intérieure formée conformément à une surface extérieure (104) de l'élément structurel (100) ;
un support (110) comportant une ossature portante (111) et une membrane de pression expansible (200), formée de telle sorte qu'elle remplit dans un état non expansé le moule (102) en laissant une distance d'expansion (112) entre une surface portante (108) formée par la surface extérieure de la membrane de pression (200) du support (110) et de la surface de formage (106), l'ossature portante (111) comprenant un renfoncement (210) pour insérer un élément raidisseur (208) ;
un moyen d'expansion de la membrane de pression (200) de telle manière que, lors du recouvrement de la surface portante (108) avec une structure fibreuse (114) en forme de tuyau de la disposition du support (110) dans le moule (102), la surface portante (108) étend radialement la structure fibreuse (114) et l'appuie contre la surface de formage (106) ;
un moyen de guidage (210 ; 302) de l'élément raidisseur (208), pendant l'expansion de la membrane de pression (200), dans une direction radiale (212) du moule (102) ; et
un moyen d'infiltration de la structure fibreuse (114) avec une matrice durcissable (115).

11. Dispositif selon la revendication 10,
**caractérisé par le fait que**
la distance d'expansion (112) est entre 1 cm et 10 cm.

12. Dispositif selon la revendication 10 ou 11,
**caractérisé par le fait que**
le moyen d'expansion est réalisé de manière à générer une différence de pression entre une zone intérieure (202) du support (110) et une zone intermédiaire (206) entre la membrane de pression (200) et le moule (102).

13. Dispositif selon la revendication 12,
**caractérisé par le fait que**
le moyen d'expansion comprend un compresseur (205) pour augmenter une pression à l'intérieur de la zone interne (202) du support (110) au-delà de la pression atmosphérique.

14. Dispositif selon la revendication 12,
**caractérisé par le fait que**
le moyen d'expansion comprend une pompe à vide pour abaisser une pression à l'intérieur de la zone intermédiaire (206) en deçà de la pression atmosphérique.

15. Dispositif selon au moins l'une des revendications 10 à 14,
**caractérisé par le fait que**
le moyen de guidage (210 ; 302) comprend au moins un couvercle de guidage (500) pour le montage au niveau d'au moins une extrémité du moule (102) et/ou du support (110), le couvercle de guidage (500) présentant une fente de guidage (302) s'étendant dans une direction radiale (212) du moule (102) tubulaire pour guider l'élément raidisseur (208).
